# DEMANDE DE BREVET EUROPEEN

(11) **EP 0 810 139 A1**
(43) Date de publication de la demande: **03.12.1997**
(21) Numéro de dépôt: 97401107.4
(22) Date de dépôt: 20.05.1997
(51) Int. Cl.: B62D 1/16

(54) **Ensemble de colonne de direction notamment de véhicule automobile**

(30) Priorité: 30.05.1996 FR 9606685
(71) Demandeur: ECIA - EQUIPEMENTS ET COMPOSANTS POUR L'INDUSTRIE AUTOMOBILE, F-25400 Audincourt (FR)
(72) Inventeur: Duchene, Jean-Marc, 25200 Vieux-Charmont (FR); Mouhot, Frédéric, 25420 Voujeaucourt (FR)
(74) Mandataire: Habasque, Etienne Joel Jean-François

(57) **Abrégé**

Cet ensemble de colonne de direction notamment de véhicule automobile, du type comportant un arbre de direction (2) monté déplaçable à rotation dans un corps de colonne (3) et des moyens (4) de restriction des déplacements axiaux de l'arbre dans le corps, pour le montage de l'ensemble sur le reste de la structure du véhicule, déplaçables entre une position active et une position escamotée et comportant des premiers moyens de butée (5) reliés au corps et des seconds moyens (6) en forme de collerette, reliés à l'arbre, est caractérisé en ce que les seconds moyens en forme de collerette (6) sont venus de matière avec un manchon (6a) en matière plastique surmoulé autour d'au moins une portion de l'arbre.

## Description

La présente invention concerne un ensemble de colonne de direction notamment de véhicule automobile.

On connaît déjà dans l'état de la technique, un certain nombre d'ensembles de colonne de direction de ce type, qui comportent un arbre de direction monté déplaçable à rotation dans un corps de colonne.

Pour diverses raisons, liées par exemple à l'utilisation de paliers de guidage particuliers ou à la nécessité d'autoriser un certain déplacement axial de l'arbre dans le corps, on a équipé certains de ces ensembles de moyens de restriction des déplacements axiaux de l'arbre dans le corps, pour permettre le montage de l'ensemble de colonne sur le reste de la structure du véhicule.

Ceci est nécessaire pour permettre en particulier un positionnement correct de l'arbre par rapport au reste du mécanisme de direction du véhicule, lorsque l'opérateur de montage relie l'extrémité correspondante de l'arbre au reste du mécanisme de direction du véhicule.

Différents modes de réalisation de ces moyens de restriction ont déjà été proposés dans l'état de la technique.

On se reportera par exemple au document EP-A-O 655 381 au nom de la demanderesse.

Ainsi par exemple, ces moyens de restriction peuvent comporter des moyens d'immobilisation axiale de l'arbre dans le corps, comportant un téton d'immobilisation comprenant un anneau de préhension à l'une de ses extrémités et des surfaces de butée à l'autre de ses extrémités, ce téton d'immobilisation étant engagé dans un évidement du corps de manière que les surfaces de butée de celui-ci s'étendent de part et d'autre d'une collerette fixée sur l'arbre de direction, pour immobiliser celui-ci dans le corps, en vue du montage de cet ensemble sur le véhicule.

Une fois ce montage réalisé, l'opérateur retire ce téton d'immobilisation ou le déplace vers une position escamotée de libération de la collerette et donc de l'arbre.

La position de cet arbre dans le corps est alors déterminée en fonction de la structure du mécanisme de direction et de l'ensemble de colonne.

Selon une variante de réalisation décrite dans ce document antérieur, cet ensemble de colonne comporte également des moyens de limitation des déplacements axiaux de l'arbre dans le corps lorsque les moyens d'immobilisation axiale temporaire sont en position escamotée.

Ces moyens sont toujours adaptés pour coopérer avec la collerette fixée sur l'arbre de direction.

On conçoit cependant que cette structure présente un certain nombre d'inconvénients, notamment au niveau de la réalisation et de la fixation de cette collerette sur l'arbre de direction.

Le but de l'invention est donc de résoudre ces problèmes.

A cet effet, l'invention a pour objet un ensemble de colonne de direction notamment de véhicule automobile, du type comportant un arbre de direction monté déplaçable à rotation dans un corps de colonne et des moyens de restriction des déplacements axiaux de l'arbre dans le corps, pour le montage de l'ensemble sur le reste de la structure du véhicule, déplaçables entre une position active et une position escamotée et comportant des premiers moyens de butée reliés au corps et des seconds moyens en forme de collerette, reliés à l'arbre, caractérisé en ce que les seconds moyens en forme de collerette sont venus de matière avec un manchon en matière plastique surmoulé autour d'au moins une portion de l'arbre.

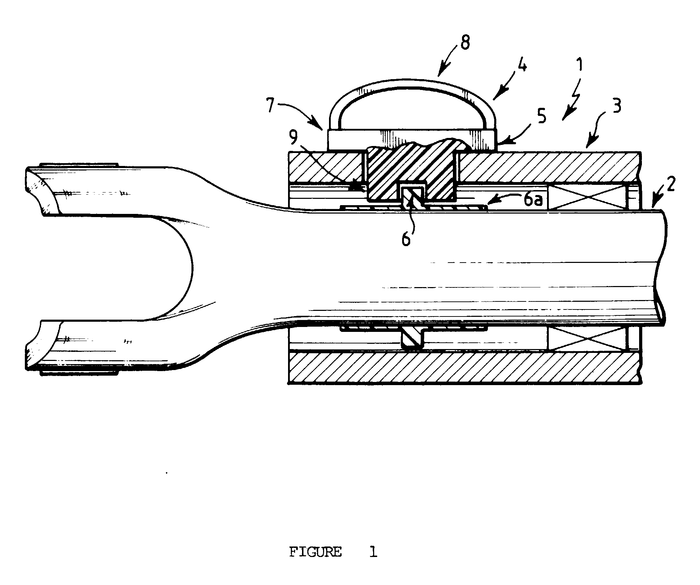

L'invention sera mieux comprise à l'aide de la description qui va suivre donnée uniquement à titre d'exemple et faite en se référant au dessin annexé qui représente une vue en coupe schématique illustrant la structure générale d'un ensemble de colonne de direction selon l'invention.

On reconnaît en effet sur cette figure, un ensemble de colonne de direction notamment pour véhicule automobile, désigné par la référence générale 1.

Cet ensemble de colonne comporte un arbre de direction désigné par la référence générale 2, monté déplaçable à rotation dans un corps de colonne de direction, désigné par la référence générale 3.

De plus, cet ensemble de colonne comporte des moyens de restriction des déplacements axiaux de l'arbre dans le corps, pour le montage de l'ensemble sur le reste de la structure du véhicule, déplaçables entre une position active et une position escamotée. Pour de plus amples renseignements concernant la structure de ces moyens de restriction, on pourra se reporter au document antérieur mentionné précédemment.

On notera simplement que ces moyens sont désignés par la référence générale 4 sur cette figure et comporte des premiers moyens de butée reliés au corps et désignés par la référence générale 5 et des seconds moyens en forme de collerette reliés à l'arbre et désignés par la référence générale 6.

Comme cela est classique, les premiers moyens reliés au corps peuvent comporter un organe en forme de téton 7 muni d'un anneau de préhension 8 et de surfaces de butée 9 adaptées pour coopérer avec les seconds moyens en forme de collerette 6, reliés à l'arbre, afin d'immobiliser celui-ci en position dans le corps.

Des moyens de limitation des déplacements axiaux de l'arbre dans le corps peuvent également être prévus comme cela est décrit dans le document mentionné précédemment.

Selon l'invention les seconds moyens en forme de collerette 6, sont venus de matière avec un manchon 6a en matière plastique surmoulé autour d'au moins une portion de l'arbre 2.

Cet arbre peut également être constitué par une portion d'arbre interne adaptée pour coulisser dans une portion d'arbre externe d'un arbre télescopique et dans ce cas, le manchon en matière plastique peut également s'étendre sur la totalité de la longueur de cette portion d'arbre interne et être monté sous contrainte dans la portion d'arbre externe afin de rattraper les jeux d'assemblage entre ces portions d'arbre.

On conçoit que cette réalisation de ces moyens en forme de collerette est extrêmement simple et peu coûteuse par rapport au mode de réalisation décrit dans le document antérieur, dans lequel cette collerette était réalisée par un organe en forme de rondelle fixée sur l'arbre.

## Revendications

1. Ensemble de colonne de direction notamment de véhicule automobile, du type comportant un arbre de direction (2) monté déplaçable à rotation dans un corps de colonne (3) et des moyens (4) de restriction des déplacements axiaux de l'arbre dans le corps, pour le montage de l'ensemble sur le reste de la structure du véhicule, déplaçables entre une position active et une position escamotée et comportant des premiers moyens de butée (5) reliés au corps et des seconds moyens (6) en forme de collerette, reliés à l'arbre, caractérisé en ce que les seconds moyens en forme de collerette (6) sont venus de matière avec un manchon (6a) en matière plastique surmoulé autour d'au moins une portion de l'arbre.

2. Ensemble de colonne de direction notamment de véhicule automobile selon la revendication 1, caractérisé en ce que l'arbre est une portion d'arbre interne d'un arbre télescopique et en ce que le manchon en matière plastique s'étend sur la totalité de la longueur de la portion d'arbre.
